# EUROPEAN PATENT APPLICATION

(11) **EP 4 477 913 A1**
(43) Date of publication of application: **18.12.2024**
(21) Application number: 23752643.9
(22) Date of filing: 20.01.2023
(51) Int. Cl.: F16F 1/36, F16F 7/00, F16F 15/08

(54) **BUFFER STOPPER**

(30) Priority: 10.02.2022 JP 2022019407
(71) Applicant: NOK Corporation, Tokyo 105-8585 (JP)
(72) Inventor: TSUYUKI Shunsuke, Saihaku-gun Tottori 683-0362 (JP)
(74) Representative: TBK
(86) International application number: PCT/JP2023/001716
(87) International publication number: WO 2023/153175

(57) **Abstract**

There is provided a cushioning stopper having a two-stage characteristic.

The cushioning stopper includes an elastic body 11 with a ring shape formed to have a size that can be mounted in a mounting space, and an elastic body restraining member 21 disposed so as to cover a part of an outer periphery of the elastic body 11 and preventing expansion of the elastic body 11, wherein the elastic body 11 has a first elastic body 12 provided between two members that are relatively displaced in an axial direction, and compressed in the axial direction by the two members to expand radially outward when the distance between the two members is reduced, and a second elastic body 13 formed to project outward from an outer peripheral surface of the first elastic body 12 on one end side in the axial direction of the first elastic body, the elastic body restraining member 21 is formed to have an L-shaped cross section covering an end face on the one end side of the elastic body 11 and an outer peripheral surface of the second elastic body 13, and the second elastic body 13 has a recess 14 on an end face opposite to the one end side in the axial direction, which is recessed inward from the end face.

## Description

### Technical Field

The present invention relates to a cushioning stopper. More particularly, the present invention relates to a cushioning stopper having a two-stage characteristic capable of switching from an initial characteristic to a secondary characteristic.

### Description of the Related Art

In a steering system for an automobile or the like, a rubber stopper is sometimes used for the purpose of shock absorption, in addition to the requirement for vibration control for rattling noise in a worm gear part (for example, refer to Patent Document 1). Regarding the target rubber stopper, as a required characteristic for absorbing shocks while reducing noise and vibration, a two-stage characteristic is desirable in which the rigidity is low at the initial stage of loading and becomes high after a certain stroke. For example, in order to obtain the two-stage characteristic, a technique of adjusting a restraining state of rubber and utilizing volumetric compression of rubber is known as an existing technique.

### Citation List

### Patent Document

[Patent Document 1] JP-A-2009-30721

### SUMMARY OF THE INVENTION

### Problem to be Solved by the Invention

When using a conventional rubber stopper, it is necessary to bring the elastic body constituting the rubber stopper into contact with the outer wall of the counterpart side (for example, a housing). Therefore, in the conventional rubber stopper, it is difficult to satisfy the desired two-stage characteristic when the counterpart structure does not have a housing and is attached to the inner diameter shaft.

The present invention has been made in view of such prior art. The present invention provides a cushioning stopper having a two-stage characteristic capable of switching from an initial characteristic to a secondary characteristic.

### Means for Solving the Problems

According to the present invention, there is provided a cushioning stopper described below.
[1] A cushioning stopper including an elastic body with a ring shape formed to have a size that can be mounted in a mounting space, and an elastic body restraining member disposed so as to cover a part of an outer periphery of the elastic body and preventing expansion of the elastic body,
   wherein the elastic body has a first elastic body provided between two members that are relatively displaced in an axial direction, and compressed in the axial direction by the two members to expand radially outward when the distance between the two members is reduced, and a second elastic body formed to project outward from an outer peripheral surface of the first elastic body on one end side in the axial direction of the first elastic body,
   the elastic body restraining member is formed to have an L-shaped cross section covering an end face on the one end side of the elastic body and an outer peripheral surface of the second elastic body, and
   the second elastic body has a recess on an end face opposite to the one end side in the axial direction, which is recessed inward from the end face.
[2] The cushioning stopper according to [1], wherein the elastic body restraining member is made of a metal material or a hard resin material.

The cushioning stopper includes an elastic body and an elastic body restraining member that is disposed so as to cover a part of an outer periphery of the elastic body and prevent expansion of the elastic body. The elastic body includes a first elastic body disposed between two members that are displaced relative to each other in the axial direction, and a second elastic body formed to project outward from an outer peripheral surface of the first elastic body. The second elastic body has a recess on an end face opposite to the one end side in the axial direction covered by the elastic body restraining member, which is recessed inward from the end face.

The cushioning stopper formed as described above has an effect of having a two-step characteristic capable of switching from an initial characteristic to a secondary characteristic. Specifically, when the elastic body is compressed by an input of a load, the first elastic body expands in the radial direction by the compression. In the initial stage of compression of the first elastic body, the elastic body has a relatively low rigidity. After this initial stage, when the first elastic body is further compressed and expanded in the radial direction, the recess of the second elastic body is filled with the elastic body in accordance with the expansion, and the elastic body is restrained by the elastic body restraining member. In such a subsequent stage, the elastic body has high rigidity, and a reaction force higher than that in the initial stage can be generated. As described above, the cushioning stopper of the present invention can obtain an optimum two-stage characteristic of low rigidity at the initial stage and high rigidity at a certain stroke, and has an ideal characteristic for shock absorption.

Further, the cushioning stopper of the present invention is capable of setting arbitrary two-stage characteristic regardless of the counterpart structure. Further, since the setting of the housing or the like is not required for the counterpart structure, a space of the part where the cushioning stopper is provided can be reduced.

### BRIEF DESCRIPTION OF THE DRAWINGS

FIG. 1 is a perspective view schematically showing a first embodiment of a cushioning stopper.
FIG. 2 is an enlarged cross-sectional view of a cross-sectional portion of the cushioning stopper shown in FIG. 1.
FIG. 3 is an enlarged cross-sectional view showing a deformed state of the cushioning stopper shown in FIG. 2 when a load is applied.
FIG. 4 is a cross-sectional view schematically showing an example of a mounting state of a cushioning stopper.
FIG. 5 is a graph showing a relation between a reaction force [N] and a displacement [mm] in the cushioning stopper according to a first embodiment.

### Mode for Carrying out the Invention

Hereinafter, embodiments of the present invention will be described referring to the drawings. It should be understood that the present invention is not limited to the following embodiments, and modifications, improvements, and the like can be made as appropriate based on ordinary knowledge of a person skilled in the art without departing from the spirit of the present invention.

### (1) Cushioning stopper:

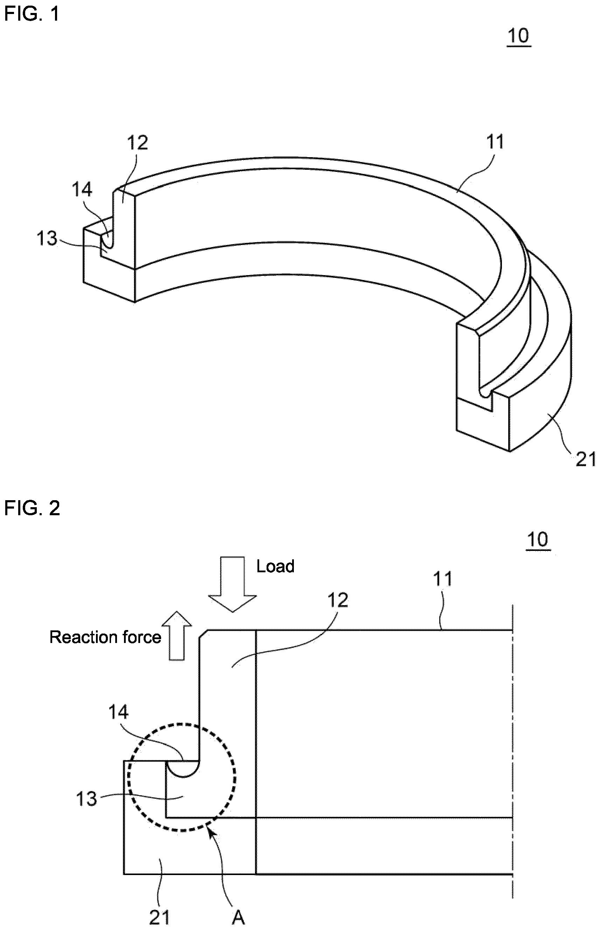

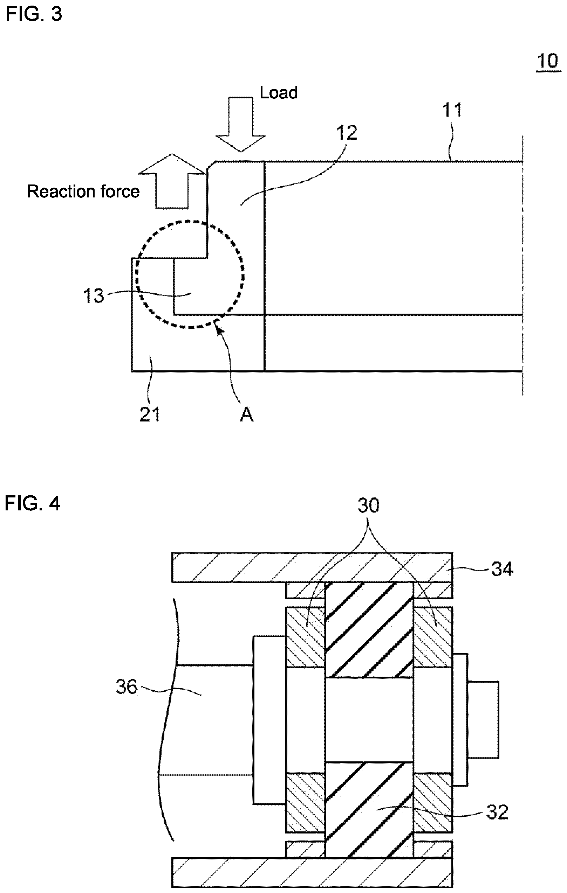

A first embodiment of the cushioning stopper of the present invention is a cushioning stopper 10 as shown in FIGS. 1 to 3. The cushioning stopper 10 of the present embodiment includes an elastic body 11 with a ring shape formed to have a size that can be mounted in a mounting space, and an elastic body restraining member 21 disposed so as to cover a part of an outer periphery of the elastic body 11 and preventing expansion of the elastic body 11. Here, FIG. 1 is a perspective view schematically showing a first embodiment of a cushioning stopper. FIG. 2 is an enlarged cross-sectional view of a cross-sectional portion of the cushioning stopper shown in FIG. 1, and FIG. 3 is an enlarged cross-sectional view showing a deformed state of the cushioning stopper shown in FIG. 2 when a load is applied.

The cushioning stopper 10 of the present embodiment can be used for a portion where shock absorbing is required in a vehicle such as an automobile, or a portion where shock absorbing is required in a construction field or the like. For example, the cushioning stopper 10 of the present embodiment is mounted between a steering rack and a rack housing in a steering device of a vehicle such as an automobile, and has a function of stopping the displacement of the steering rack while exerting a cushioning effect when the steering device is operated. Here, FIG. 4 is an explanatory view for explaining an example of an application portion of the cushioning stopper, and is a cross-sectional view schematically showing an example of a mounting state of the cushioning stopper. In FIG. 4, reference numeral 30 denotes a cushioning stopper. As shown in FIG. 4, the cushioning stopper 30 is mounted in a worm 36 constituting a speed reduction mechanism or the like. The worm 36 is supported by a fitting hole of a housing 34 through a bearing 32 serving as a pair of rolling bearings. By mounting the cushioning stopper 30 in this manner, it is possible to stop the displacement of the steering rack while exerting a cushioning effect when the steering device is operated.

The elastic body 11 has a first elastic body 12 and a second elastic body 13 formed to project outward from an outer peripheral surface of the first elastic body 12 on one end side in the axial direction of the first elastic body 12. The first elastic body 12 is provided between two members that are relatively displaced in an axial direction, and is compressed in the axial direction by the two members to expand radially outward when the distance between the two members is reduced. On the other hand, the second elastic body 13 has a recess 14 on an end face opposite to one end side in the axial direction, which is recessed inward from the end face.

The elastic body restraining member 21 is formed to have an L-shaped cross section covering an end face on one end of the elastic body 11 and an outer peripheral surface of the second elastic body 13.

The cushioning stopper 10 formed as described above has a two-stage characteristic capable of switching from an initial characteristic to a secondary characteristic. Specifically, for example, as shown in FIG. 2, when the elastic body 11 is compressed by an input of a load, the first elastic body 12 expands in the radial direction due to compression. In the compression in the initial stage of the first elastic body 12, the elastic body 11 has a relatively low rigidity. Then, after passing through such an initial stage, the first elastic body 12 is further compressed to expand in the radial direction, the recess 14 of the second elastic body 13 is filled by the deformed elastic body 11 as the first elastic body 12 expands, and the elastic body 11 (in particular, the outer peripheral surface of the second elastic body 13) is restrained by the elastic body restraining member 21. In such a subsequent stage, the elastic body 11 has high rigidity, and a reaction force higher than that in the initial stage can be generated. As described above, the cushioning stopper 10 of the present embodiment can obtain an optimum two-stage characteristic in which the initial characteristic is low rigidity and the rigidity becomes high at a certain stroke, and has an ideal characteristic for shock absorption.

In addition, the cushioning stopper 10 of the present embodiment can be set to have any two-stage characteristic regardless of the counterpart structure. Further, since the setting of a housing or the like is not required for the counterpart structure, a space of the portion where the cushioning stopper is provided can be reduced.

As described above, the recess 14 formed in the second elastic body 13 is formed so that at least a part of the inner space thereof is filled with the elastic body 11 in accordance with the expansion of the first elastic body 12, and a large reaction force is generated in the elastic body 11. The capacity and the size of the recess 14 are not particularly limited, and can be appropriately adjusted in consideration of, for example, the magnitude of the load input to the elastic body 11, the change amount from the initial characteristic to the secondary characteristic of the elastic body 11, and the like. In FIG. 3, an example in which the entire inner space of the recess 14 of the second elastic body 13 is filled by the deformed elastic body 11 is shown, but a part of the inner space of the recess 14 of the second elastic body 13 may be formed to be filled with the deformed elastic body 11 in the next stage passing through the initial stage described above, depending on the material constituting the elastic body 11 and the capacity of the recess 14. However, in order to effectively exhibit the two-stage characteristic as described so far, it is more preferable that the inner space of the recess 14 of the second elastic body 13 is completely filled as the first elastic body 12 expands. Therefore, an appropriate volume of the recess 14 can be determined from the deformation amount of each rubber material of the first elastic body 12 and the second elastic body 13 constituting the elastic body 11.

The elastic body 11 is preferably a rubber elastic body made of a rubber material. The type of the rubber material is not particularly limited, and can be determined as appropriate in accordance with the application and usage environment of the cushioning stopper 10. For example, the rubber material used as the elastic body 11 can be selected in consideration of the temperature at the time of use of the cushioning stopper 10, whether the usage environment is an oil scattering environment, and the like. Although the rubber material used as the elastic body 11 is not particularly limited, since oil resistance is often required in the usage environment of the cushioning stopper 10, a rubber material having excellent oil resistance, such as an acrylic rubber (ACM) material or a hydrogenated nitrile rubber (HNBR) material, can be exemplified as a preferable example of the rubber material.

The elastic body restraining member 21 is for preventing expansion of the elastic body 11, and is formed of a material having higher rigidity than the elastic body 11. The elastic body restraining member 21 is preferably made of a metal material or a hard resin material. By using the elastic body restraining member 21 made of a metal material or a hard resin material, high durability against input of an impact load (rubber compressive deformation) can be obtained.

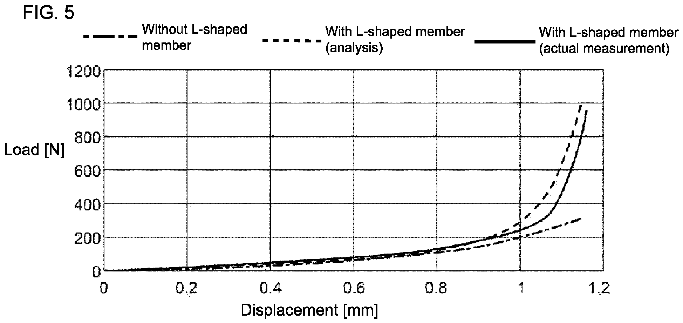

Hereinafter, the function and effect of the cushioning stopper 10 of the present embodiment will be described more fully referring to the graph shown in FIG. 5. FIG. 5 is a graph showing the relation between the reaction force [N] and the displacement [mm] in the cushioning stopper 10 of the present embodiment. In the graph shown in FIG. 5, the vertical axis represents the load [N] applied to the elastic body, and the horizontal axis represents the displacement [mm] of the elastic body. In addition, "Without L-shaped member" indicated by a dashed-dotted line in FIG. 5 shows the relation between the load [N] and the displacement [mm] of the cushioning stopper manufactured without the elastic body restraining member 21 in the cushioning stopper 10 as shown in FIGs. 1 to 3, "With L-shaped member (analysis)" indicated by a dashed line in FIG. 5 shows an analysis of the relation between the load [N] and the displacement [mm] of the cushioning stopper 10 as shown in FIGs. 1 to 3, and "With L-shaped member (actual measurement)" indicated by the solid line in FIG. 5 shows measurement results of the relation between the load [N] and the displacement [mm] of the cushioning stopper 10 as shown in FIGs. 1 to 3. The graph showing the analysis and the actual measurement shown in FIG. 5 is based on the result of analyzing or measuring a reaction force by displacing the elastic body 11 in the load direction with respect to the cushioning stopper 10 having a shape as shown in FIG. 2.

The three graphs shown in FIG. 5 each show a tendency that the displacement [mm] of the elastic body increases as the load [N] input to the elastic body increases. However, for the graphs "With L-shaped member (analysis)" and "With L-shaped member (actual measurement)", the inclination of the graphs is relatively gentle until the load is in the vicinity of 100N, and the elastic body in the cushioning stopper exhibits the property of low rigidity. Then, the inclination of the graphs gradually becomes steep from when the load exceeds 100N, and the graph rapidly rises when the load is in the vicinity of 200 to 300N. A range in which the inclination becomes gradually steep when the load is in the vicinity of 100N is mainly a range corresponding to a change period until the recess of the second elastic body is filled with the deformed elastic body. Further, the range in which the graph rapidly rises is mainly a range in which the filling with respect to the recess of the second elastic body is completed, the expansion of the second elastic body in the radial direction progresses, and the outer peripheral surface of the second elastic body is restrained by the elastic body restraining member (L-shaped member). In such a range, the elastic body has high rigidity and generates a reaction force higher than that in the initial stage.

### Industrial applicability

The cushioning stopper of the present invention can be used for a portion where shock absorption is required in a vehicle such as an automobile, or a portion where shock absorption is required in a construction field or the like.

### Description of Reference numerals

10: cushioning stopper
11: elastic body
12: first elastic body
13: second elastic body
14: recess
21: elastic body restraining member
30: cushioning stopper
32: bearing
34: housing
36: warm

## Claims

1. A cushioning stopper comprising an elastic body with a ring shape formed to have a size that can be mounted in a mounting space, and an elastic body restraining member disposed so as to cover a part of an outer periphery of the elastic body and preventing expansion of the elastic body,
wherein the elastic body has a first elastic body provided between two members that are relatively displaced in an axial direction, and compressed in the axial direction by the two members to expand radially outward when the distance between the two members is reduced, and a second elastic body formed to project outward from an outer peripheral surface of the first elastic body on one end side in the axial direction of the first elastic body,
the elastic body restraining member is formed to have an L-shaped cross section covering an end face on the one end side of the elastic body and an outer peripheral surface of the second elastic body, and
the second elastic body has a recess on an end face opposite to the one end side in the axial direction, which is recessed inward from the end face.

2. The cushioning stopper according to claim 1, wherein the elastic body restraining member is made of a metal material or a hard resin material.
